# EUROPEAN PATENT APPLICATION

(11) **EP 4 159 039 A1**
(43) Date of publication of application: **05.04.2023**
(21) Application number: 22209902.0
(22) Date of filing: 17.07.2020
(51) Int. Cl.: A01N 43/90, A01N 25/02, A01N 25/22, A01P 13/02

(54) **STABLE FORMULATION COMPRISING PINOXADEN**

(30) Priority: 18.07.2019 US 201962875608 P
(62) Divisional of application: 20745309.3
(71) Applicant: Adama Agan Ltd., 7710201 Ashdod (IL)
(72) Inventor: SILBERT, Gilad, 7917500 Kibutz Dorot (IL); MEIRON, Oren, 8502500 Meitar (IL); AL SOUSOU, Merna, 7221432 Ramla (IL); HEVRONI, Liron, 8502500 Meitar (IL)
(74) Representative: ABG Intellectual Property Law, S.L.

(57) **Abstract**

An agrochemical formulation, more specifically a stable formulation comprising a herbicide with 3-hydroxypyrazol skeleton containing a substituted phenyl group, especially pinoxaden or pyraflufen-ethyl, and 5-99 w/w percent of an oil carrier characterised in that the oil carrier has a pH of 5.0 or more as measured by a specific method defined herein. Method of use of the formulation for controlling undesired plants.

## Description

### FIELD OF THE INVENTION

The present invention relates to the field of agrochemical formulations, more specifically to a stable formulation comprising an herbicide with 3-hydroxy-pyrazol skeleton containing a substituted phenyl group.

### BACKGROUND PRIOR ART

Herbicides are extensively used in the control of grasses and other weeds. Some herbicides display a 3-hydroxy-pyrazol skeleton containing a substituted phenyl group, for example, pinoxaden, which was disclosed as compound 1.008 in WO 99/47525 A1 (Novartis AG). It has been used together with different co-herbicides; see for example WO 01/17351 A1 (Syngenta Participations AG). Also, liquid formulations have been developed, for example as described in WO 2008/049618 A2 (Syngenta Participations AG), that required a built-in phosphate adjuvant. Pinoxaden and its herbicidal uses are further disclosed in "Pesticide Chemistry. Crop Protection, Public Health, Environmental Safety" ed. H. Ohkawa et al., 2007, Wiley, Weinheim, pp. 101-110.

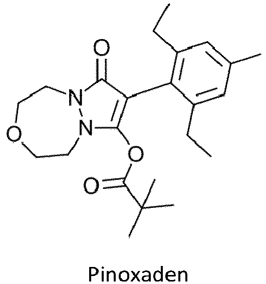

Another representative compound of this structural family is pyraflufen-ethyl, disclosed as compound 262 in EP0361114A1.

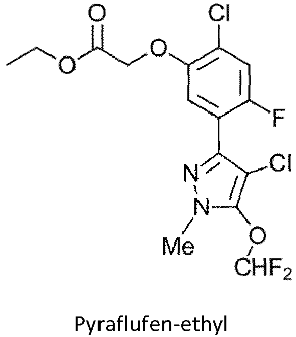

Pinoxaden and pyraflufen-ethyl have however a problem of stability and their formulations, such as oil dispersions (OD), often result in the rapid degradation of the compound.

WO 2007/073933 (Syngenta Crop Protection Inc) discloses EC herbicidal formulations comprising pinoxaden and an alcohol. The alcohol prevents the degradation of pinoxaden. The formulations further comprise a water-insoluble solvent. In addition to Solvesso 200 ND and an alcohol, Example 5 uses as co-solvent rape oil methyl ester.

Muehlebach et al. "Aryldiones incorporating a [1,4,5]-oxadiazepane ring. Part 2: Chemistry and biology of the cereal herbicide pinoxaden", Pest Manag. Sci., vol. 67, no. 12, 8 June 2011, pages 1499-1521: discloses on lines 30-42, right column of page 1509 (section 2.4.2) "... *the plants were sprayed at the 3 to 6 lead stage with an aqueous spray solution (500 L ha⁻¹ carrier volume) prepared by diluting a formulation of the technical active ingredient* [pinoxaden] *with water and a with optional addition of* [...] *Merge^{®} (1% v*/*v)"* or with *"Adigor^{®} (0.5%, v*/*v)",* i.e. a tank mixture. Both, Merge and Adigor are used as tank mix adjuvants in the dilution of the formulations immediately before their application in the field. They are therefore adjuvants intended for the physical stabilization of the diluted tank mix.

WO 2014/060557 A2 (Syngenta Participations AG) discloses EC formulations wherein the harmful effects of the heavy aromatic solvents of previous pinoxaden EC formulations are reduced. Also, the document aims to substitute tetrahydrofurfuryl alcohol (THFA) with a more environmentally friendly alcohol (used as stabilizer).

CN 108 013 066 A (Beijuing Kefa Weiye Pesticide Tech.) discloses synergistic mixtures of pinoxaden and mesosulfuron in combination with a third herbicide. Example 8 teaches a Dispersable Oil Suspension comprising 49% of active ingredients and 30% of castor oil (based on machine translation from espacenet). No information is given in relation of pinoxaden's stability, or about the pH of the castor oil, or the possible effects of the pH of castor oil on pinoxaden's stability.

AU 2019 100 546 B4 (Titan AG Pty Ltd) discloses EC herbicidal formulations comprising pinoxaden and two solvents selected from the following groups (i), (ii) or (iii): (i) acetophenone; (ii) propylene carbonate and butylene carbonate; or (iii) N-(C1 to C4 alkyl)pyrrolidone.

There is therefore in the art a need to provide improved formulations of herbicides such as pyraflufen-ehtyl or pinoxaden.

### SUMMARY OF THE INVENTION

In the search of a more stable formulation, the inventors first tried numerous oils as carriers. They were tested to determine which ones provided optimum stability to pinoxaden or pyrafluen-ethyl. During the trials it was not apparent why some oils provided stable compositions, while others, sometimes structurally related, resulted in a rapid degradation of pinoxaden.

It was not until the inventors investigated the pH of these oils that the problem could be solved, when realizing the crucial role that the oil's pH plays in the stability of pinoxaden and other co-herbicides or safeners that might be present in the mixture.

It is thus a first aspect of the present invention a formulation for controlling undesired plants comprising
(i) an herbicidal effective amount of a compound of formula (I), stereoisomers, salts or solvates thereof 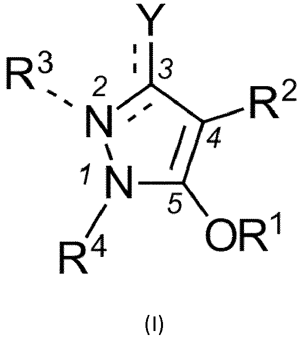 wherein
   R¹ is selected from the group consisting of C₁-C₆-alkyl, C₁-C₆-haloalkyl and -(C=O)-R⁵; wherein R⁵ is selected from the group consisting of C₁-C₆-alkyl, -C₁-C₆-alkyl-C₆-C₁₀-aryl, and -C₆-C₁₀-aryl-C₁-C₆-alkyl;
   Y is =O or X; and
   when Y is =O,
      positions 2 and 3 of the ring are connected by a single bond;
      R³ and R⁴ together form a -(CH₂)ₙ-O-(CH₂)ₘ- group, forming a ring together with the two nitrogen atom to which they are attached, wherein n and m are each an integer independently selected from 1 and 2; and
      R² is X;
   when Y is X,
      positions 2 and 3 of the ring are connected by a double bond;
      R² is selected from the group consisting of halogen, C₁-C₆-alkyl and C₁-C₆-haloalkyl;
      R³ is not present; and
      R⁴ is selected from the group consisting of C₁-C₆-alkyl, C₁-C₆-haloalkyl, -C₁-C₆-alkyl-C₆-C₁₀-aryl, and -C₆-C₁₀-aryl-C₁-C₆-alkyl;
   and wherein
      X is a phenyl group substituted by 1, 2, 3 or 4 R⁶ groups, wherein each R⁶ group is independently selected from the group consisting of halogen, C₁-C₆-alkyl, C₁-C₆-haloalkyl and -O-(CH₂)ᵥ-(C=O)-R⁷; wherein v is 0, 1, 2 or 3; and R⁷ is selected from the group consisting of -OH, -O-C₁-C₆-alkyl, -O-C₁-C₆-alkyl-C₆-C₁₀-aryl, -O-C₆-C₁₀-aryl-C₁-C₆-alkyl, -C₁-C₆-alkyl, -C₁-C₆-alkyl-C₆-C₁₀-aryl, and -C₆-C₁₀-aryl-C₁-C₆-alkyl; and
(ii) 5 to 99 w/w % of an oil carrier;
   characterized in that the oil carrier has a pH of 5.0 or more, as measured by a process consisting of the steps of
   a) making a deionized water mixture having 1 w/w% of oil;
   b) stirring the mixture of the previous step with a magnetic stirrer at 1,500 RPM for 10 minutes at 25°C;
   c) allowing the phases in the mixture to separate for 10 min at 25°C,
   d) collecting into a separate vial the lower aqueous phase;
   e) measuring at 25°C the pH of aqueous phase collected using a JENWAY 3510 pH meter, with an AgCl, liquid filled single junction electrode, such that the electrode and the thermocouple of the pH meter are inserted into the vial containing the aqueous water phase until the measured pH value is stable for 10s.

The positions in the pyrazole ring of formula (I) are marked from 1 to 5 by the corresponding atom, positions 1 and 2 corresponding to the nitrogen atoms of the ring.

The composition of the invention preferably comprises a co-herbicide, preferably a sulphonylurea.

A second aspect of the invention is a method for the control of an undesired plant (also referred herein as "weed" or "undesired vegetation") comprising dispersing in an aqueous solution the formulation of the invention and contacting the resulting mixture with the locus of said plant.

A third aspect is the use of the formulation of the invention for the control of undesired plants.

US 4,834,908 discloses that certain oil additive combinations can increase the herbicidal activity of compounds from the class of the cyclohexanediones, benzothiadiazinone dioxides, diphenyl ether herbicides and aryloxyphenoxy herbicides. The document is however silent about the importance of the oil's pH, nor does it suggest that an oil with a pH of 5.0 or more could provide a stable formulation of pinoxaden.

Neither does WO 2011/107741 A1 disclose the importance of the pH of the oil. WO 2011/107741 A1 discloses herbicidal compositions comprising a mixture of (a) an ALS inhibitor in the form of an aluminum salt and (b) pinoxaden. EC formulations and other solid formulations are described on pages 26-29, none containing an oil carrier, the latter being taught only in amounts of 0.01 to 10 w/w%, that is, as adjuvants for the tank mix (last paragraph of page 21 and page 22). See also the mixture of Axial^{™} and Adigor^{™} (oil) on lines 32-33 of page 40, wherein the Adigor^{™} is marked as "adjuvant".

WO 01/17351 (Syngenta Participations AG) discloses a composition comprising a) a 3-hydroxy-4-(4-methylphenyl)-5-oxo-pyrazoline (e.g. pinoxaden), b) a safener and c) an oil of vegetable or animal origin, a mineral oil or derivatives thereof. Preferred oils are those of vegetable origin, and all the examples refer to emulsifiable concentrates (EC) and other solid formulations (pages 33-36), wherein the oil is again only added as an additive (0.7-1 w/w %) in the tank mixture (see the biological examples on pages 37-40 or second paragraph of page 12). The oils used are MERGE (an aromatic adjuvant for EC formulations) and Emery 2231, a fatty acid methyl ester derivative. No oils are added as carriers, nor their pH is considered.

Thus, the inventors were surprised to find out that the compounds of formula (I) were stable in an oil carrier having a pH of at least 5.0.

### DETAILED DESCRIPTION OF THE INVENTION

### Definitions

In the present document the following terms are given the meaning below.

"Halogen" means in the present document as one of -F, -CI, -Br or -I.

"Alkyl" means in the present document a straight or branched hydrocarbon chain radical consisting of carbon and hydrogen atoms, containing no unsaturation, having the number of carbon atoms indicated in each case, for example 1 to 16 carbon atoms, which is attached to the rest of the molecule by a single bond. In an embodiment of the invention the alkyl group comprises 1 to 8 carbon atoms. In a further embodiment it comprises 1 to 4 carbon atoms. Exemplary alkyl groups can be methyl, ethyl, n-propyl, i-propyl, n-butyl, t-butyl, or n-pentyl.

"Haloalkyl" means in the present document an alkyl group that is substituted with at least one of -F, -CI, -Br or -I. The skilled person is aware of different substituents used frequently in organic chemistry, such as haloalkyl groups comprising 1, 2, 3, 4, 5, 6, 7 or 8 halogen substituents. Haloalkyl groups wherein all positions have been substituted with halogen atoms are also frequent (that is, perfluoro or perchloro substituents). Exemplary haloalkyl groups can be -CH₂F, -CH₂Cl, -CHF₂, -CF₃, -CCl₃, or -CF₂CF₃.

"Cyano" means in the present document -CN.

"Aryl" means in the present document an aromatic hydrocarbon radical having the number of carbon atoms indicated in each case, such as phenyl or naphthyl. The aryl radical may be optionally substituted by one, two or three groups selected from the group consisting of halogens, alkyl and haloalkyl groups.

"Heteroaryl" means in the present document a stable 3- to 15- membered cycloalkyl ring system attached to the rest of the molecule through a single bond, wherein one to five carbons atoms of the ring scaffold are replaced by heteroatoms selected from the group consisting of nitrogen, oxygen, and sulphur, and wherein at least one of the rings is aromatic. For the purposes of this invention, the heteroaryl may be a monocyclic, bicyclic or tricyclic ring system, which may include fused ring systems; and the nitrogen, carbon or sulfur atoms in the heteroaryl radical may be optionally oxidised; the nitrogen atom may be optionally quaternized. For example, an heteroaryl group can comprise a 4-to 8-membered ring with one or more heteroatoms, for example a 5-or 6-membered ring, wherein one, two or three carbons atoms of the ring scaffold are replaced by heteroatoms selected from the group consisting of nitrogen, oxygen, and sulphur, and wherein at least one of the rings is aromatic. Examples of heteroaryl groups include, but are not limited to pyridine, pyrazole, benzimidazole, benzothiazole, furan, isothiazole, imidazole, indole, purine, quinoline, thiadiazole.

The present document teaches that some of the compounds must be in an "herbicidal effective amount", which is understood as the amount of that compound that is effective to provide the desired effect when used in combination with the other components of the formulation. The amount that is "effective" will vary from application to application, depending on the particular crop to be treated or undesirable plant targeted. Additionally, what amount is considered effective may vary depending on the particular objective that is being pursued and on the balancing of certain outcomes, such as for example the effectiveness on the weed control versus the damage to crop. Thus, it is not always possible to specify an exact "effective amount", but in any given situation it may be determined by one of ordinary skill in the art using routine experimentation.

This is also true when determining the effective amount of a safener, a compound having antagonistic effects on the active herbicides present in the formulation, that is used to prevent damage to the crop.

The formulation of the invention is thus useful for the "control of undesired plants", which is given in the present document its usual meaning in the agrochemical industry, that is, amongst others, the capacity to kill, prevent growth or reproduction, or to diminish the health of unwanted plants in a given locus, by interfering in the unwanted plant's mechanisms, such as metabolism, photosynthesis and/or cell division.

"Crop" refers to any plant of industrial interest, including whole plants, plant organs (e.g. leaves, stems, twigs, roots, trunks, limbs, shoots, fruits etc.), plant cells, or plant seeds. This term also encompasses plant crops such as fruits. The term "plant" also includes the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

Crop locus are areas of land on which the cultivated plants are already growing or in which the seeds of those cultivated plants have been sown, also referring to areas of land on which it is intended to grow those cultivated plants.

Unless otherwise indicated, all weight percentages ("w/w %") are calculated with respect to the total weight of the formulation: 100x(weight of compound/total weight of formulation).

"Agrochemical acceptable" refers to any molecular entity and composition that is used in the formulation of the invention to improve any of its properties, such as any chemical, biological or physico-chemical properties approved for use agrochemistry by a regulatory agency or a state government or other generally recognized pharmacopeia.

The invention also provides salts of the compounds herein defined. For instance, salts of compounds provided herein may be acid addition salts, base addition salts or metallic salts, and they can be synthesized from the parent compound which contains a basic or acidic moiety by conventional chemical methods. Generally, such salts are, for example, prepared by reacting the free acid or base forms of these compounds with a stoichiometric amount of the appropriate base or acid in water or in an organic solvent or in a mixture of the two. Generally, non-aqueous media like ether, ethyl acetate, ethanol, isopropanol or acetonitrile are preferred. Examples of the acid addition salts include mineral acid addition salts such as, for example, hydrochloride, hydrobromide, hydroiodide, sulphate, nitrate, phosphate, and organic acid addition salts such as, for example, acetate, maleate, fumarate, citrate, oxalate, succinate, tartrate, malate, mandelate, methanesulphonate and p-toluenesulphonate. Examples of the alkali addition salts include inorganic salts such as, for example, ammonium, and organic alkali salts such as, for example, ethylenediamine, ethanolamine, N,N-dialkylenethanolamine, triethanolamine, glucamine and basic aminoacids salts. Examples of the metallic salts include, for example, sodium, potassium, calcium, magnesium, aluminium and lithium salts.

The term "solvate" according to this invention is to be understood as meaning any form of the compound which has another molecule (most likely a polar solvent) attached to it via noncovalent bonding. Examples of solvates include hydrates and alcoholates, e.g. methanolate.

An "stereoisomer" in the present patent application refers to compounds made up of the same atoms bonded by the same sequence of bonds but having different three-dimensional structures which are not interchangeable.

The term "about" as used herein specifically includes ±10% from the indicated values in the range. In addition, the endpoints of all ranges directed to the same component or property herein are inclusive of the endpoints, are independently combinable, and include all intermediate points and ranges.

It is understood that where a parameter range is provided, all integers within that range, and tenths thereof, are also provided by the invention as if the integers and tenths thereof are expressly described herein. For example, "between 75 and 99 w/w %" includes 70 0 w/w %, 70 1 w/w %, 70. 2 w/w %, 70. 3 w/w %, etc. up to 99.0 w/w %.

### Oil

The oil carrier having a pH of 5.0 or more can be a mineral oil or an oil of vegetable origin such as, for example, rapeseed oil, olive oil or sunflower oil, an emulsified vegetable oil, or an alkyl ester of an oil of vegetable origin such as, for example, the methyl or ethyl ester derivatives, or an oil of animal origin such as fish oil or beef tallow.

Specially preferred oil carriers are mineral oils, whether aromatic or non-aromatic, preferably paraffins, such as isoparaffins. Exemplary isoparaffins comprise C₈-C₂₅, for example C₁₀-C₂₀-isoalkanes, i.e. alkanes comprising mostly linear molecules with a methyl group in one of its penultimate carbon atoms to form a -C(H)(CH₃)₂ residue. It is for example preferred that the oil carrier is an isoparaffinic oil comprising at least 20 w/w % of C₁₄-C₁₉-isoalkanes, with respect to the total weight of the oil, and less than 2 w/w % of aromatic compounds, with respect to the total weight of the oil.

The inventors have also discovered that the water content of the oil can play an important role in the stability of the formulation. It is thus preferred that the water content in the oil is below 0.2, preferably below 0.18 or below 0.15, for example, below 0.12 or below 0.10, typically between 0.001 and 0.19, more preferably between 0.01 and 0.12 w/w %, with respect to the total weight of the oil, as measured by Karl-Fischer titration.

The pH of the oil as measured according to the process defined above, is preferably 5.5 or more, or 5.8 or more, typically between 5.0 and 10.0, or between 5.5 and 9.0, or between 5.5 and 8.0, for example, between 5.5 and 7.8, or between 5.6 and 7.6, or between 5.8 and 7.5.

As shown in examples 1 and 2 described herein, the combination of low water content and a pH of at least 5.0 provides excellent stability results. Thus, it is preferable that the water content in the oil carrier is less than 0.20 w/w %, with respect to the total weight of the oil carrier, as measured by Karl-Fischer titration, and the pH is between 5.5 and 10.0, preferably between 5.5 and 9.0, as measured by the method defined above.

The oil is the carrier, preferably in an oil dispersion formulation (OD), and it is thus preferably used in amounts above 10 w/w %, more preferably above 20 w/w %, or above 40 w/w %, or above 50 w/w %, or above 70 w/w %, or above 80 w/w %, for example, between 75 w/w % and 99 w/w %, or between 80 and 95 w/w %.

### Compounds of formula (I)

The compound of formula (I) can be a compound of formula (IA) or a stereoisomer, salt or solvate thereof 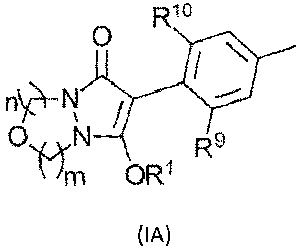 wherein
R¹ is selected from the group consisting of -(C=O)-R⁵; wherein R⁵ is selected from the group consisting of -C₁-C₆-alkyl, -C₁-C₆-alkyl-C₆-C₁₀-aryl, and C₆-C₁₀-aryl-C₁-C₆-alkyl; and
R⁹ and R¹⁰ are each independently a C₁-C₆-alkyl; and
m and n are each an integer independently selected from 1 and 2.

The compounds of formula (IA), its stereoisomers, salts or solvates thereof are readily available following the procedures already taught in the prior art, such as WO 96/21652, WO 01/17351, or WO 01/17352.

It is preferred that in the compounds of formula (IA), its stereoisomers, salts or solvates, m and n are both 2. It is also preferred that R¹ is a -(C=O)-R⁵ or a -(C=O)-O-R⁵, preferably a -(C=O)-R⁵. R⁵ is preferably a C₁-C₆-alkyl group, preferably a branched C₁-C₄ selected from isopropyl (-C(H)(CH₃)₂), isobutyl (-CH₂-C(H)(CH₃)₂) or tert-butyl (-C(CH₃)₃). It is preferred that R² and R³ are both the same, preferably selected from a C₁-C₄-alkyl, more preferably a linear C₁-C₄-alkyl, such as methyl, ethyl, propyl or butyl, preferably ethyl.

In the present invention it is preferred that the compound of formula (IA) is pinoxaden, its stereoisomers, salts or solvates thereof.

All tautomers of the compounds of formula (I), (IA) or (IB) are included in the scope of the present invention.

On the other hand, the compound of formula (I) can be a compound of formula (IB) or a stereoisomer, salt or solvate thereof 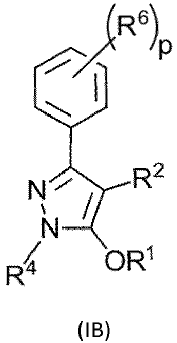 wherein
R¹ is selected from the group consisting of C₁-C₆-alkyl and C₁-C₆-haloalkyl;
R² is selected from the group consisting of halogen and C₁-C₆-haloalkyl;
R⁴ is selected from the group consisting of C₁-C₆-alkyl and C₁-C₆-haloalkyl;
p is an integer selected from 1, 2, 3 or 4; and
each R⁶ group is independently selected from the group consisting of halogen, C₁-C₆-alkyl, C₁-C₆-haloalkyl and -O-(CH₂)ᵥ-(C=O)-R⁷; wherein v is 0, 1, 2 or 3; and R⁷ is selected from the group consisting of -OH, -O-C₁-C₆-alkyl, -O-C₁-C₆-alkyl-C₆-C₁₀-aryl, -O-C₆-C₁₀-aryl-C₁-C₆-alkyl, -C₁-C₆-alkyl, -C₁-C₆-alkyl-C₆-C₁₀-aryl, and -C₆-C₁₀-aryl-C₁-C₆-alkyl.

Preferably, in a compound of formula (IB) each R⁶ group can be independently selected from the group consisting of halogen, C₁-C₆-alkyl, C₁-C₆-haloalkyl and -O-(CH₂)ᵥ-(C=O)-R⁷; wherein v is 0, 1, 2 or 3; and R⁷ is selected from the group consisting of -OH, -O-C₁-C₆-alkyl, -O-C₁-C₆-alkyl-C₆-C₁₀-aryl, and -O-C₆-C₁₀-aryl-C₁-C₆-alkyl. More preferably, each R⁶ group can be independently selected from the group consisting of halogen, C₁-C₆-haloalkyl and -O-(CH₂)ᵥ-(C=O)-R⁷; wherein v is 0, 1, 2 or 3; and R⁷ can be selected from the group consisting of -O-C₁-C₆-alkyl. It is preferred that v is 1 or 2.

The compounds of formula (IB), its stereoisomers, salts or solvates are readily available following the procedures already taught in the prior art, such as EP0361114A1.

The compound of formula (I) can be added in different amounts, typically between 0.1 w/w % and 70 w/w %, for example, between 0.1 and 50 w/w % or between 0.5 and 10 w/w % or between 1 and 8 w/w %. The loading of the compound of formula (I) can depend on the type of formulation used. For example, in the present application a suspension of the compound of formula (I) is preferred, typically an oil-in-water emulsion (EW), a microemulsion (ME), an oilbased suspension concentrate or oil concentrate (OD), the formulation preferably being an OD comprising between 0.1 and 15 w/w % of a compound of formula (I) stereoisomers, salts or solvates thereof.

### Co-herbicides

To attend the problem of weed resistance the formulators follow several strategies, most notably the combined use of two or more herbicides having different Modes of Action (MOA), sometimes also in combination with a safener. Such combinations are ideally administered in a single formulation, but can be added simultaneously in different formulations or added at different times.

The compositions of the invention may thus comprise at least one co-herbicide, for example one selected from the group consisting of ALS inhibitors such as sulphonylureas (e.g. mesosulfuron), sulphonyl-carbonyl-triazolinones, imidazolinones, triazolopyrimidines or pyrimidinyl (thio) benzoates; inhibitors of the photosynthesis at PS II such as nitriles, phenyl-pyridazines, benzothiadiazinones, triazines, triazolinones or triazinones; PS-I-electron diversion such as bipyridyliums; protoporphyrinogen oxidase inhibitors, such as diphenyl ethers, thiadiazoles, pyrmidinediones, N-phenyl-phthalimides, oxazolidinediones, tiazolinones, oxadiazoles or phenypyrazoles; PDS inhibitors; 4-HPPD inhibitors; DOXP synthase inhibitors and other pigment synthesis inhibitors; EPSP synthase inhibitors; glutamine synthase inhibitors; DHP inhibitors; microtubule assembly inhibitors; microtubule organization inhibitors; VLCFA inhibitors; inhibitors of the synthesis of cellulose; membrane disruptors (uncouplers); non-ACCase inhibitors of lipid synthesis; synthetic auxins; or auxin transport inhibitors.

Herbicides that can be used as co-herbicides in the present invention can be for example amidosulfuron, azimsulfuron, bensulfuron-methyl, chlorimuron-ethyl, cinosulfuron, chlorsulfuron, chlorimuron, cyclosulfamuron, ethametsulfuron-methyl, ethoxysulfuron, fluazasulfuron, flupyrsulfuron, imazosulfuron, iodosulfuron, mesosulfuron-metsulfuron-methyl, nicosulfuron, oxasulfuron, primisulfuron, pyrazosulfuron-ethyl, sulfosulfuron, rimsulfuron, imazamox, imazapyr, pyrithiobac-sodium, pyriminobac, bispyribac-sodium, atrazin, butracil, simazin, simethryne, terbutryne, terbuthylazine, trimexyflam, isoproturon, chlortoluron, diuron, dymron, fluometuron, linuron, methabenzthiazuron, glyphosate, sulfosate, glufosinate, nitrofen, bifenox, acifluorfen, lactofen, oxyfluorfen, ethoxyfen, fluoroglycofen, fomesafen, halosafen, azafenidin, benzfendizone, butafenacil, carfentrazone-ethyl, cinidon-ethyl, flumichlorac-pentyl, flumioxazin, fluthiacet-methyl, oxadiargyl, oxadiazon, pentoxazon, sulfentrazone, fluazolate, pyraflufen-ethyl, alachlor, acetochlor, butachlor, dimethachlor, dimethenamid, S-dimethenamid, metazachlor, metolachlor, S-metolachlor, pretilachlor, propachlor, propisochlor, thenylchlor, pethoamid, 2,4-D, fluroxypyr, MCPA, MCPP, MCPB, trichlorpyr, mecropop-P, hexazinon, metamitron, metribuzin, oryzalin, pendimethalin, trifluralin, chloridazon, norflurazon, chlorpropham, desmedipham, phenmedipham, propham, mefenacet, fluthiacet, butylate, cycloate, diallate, EPTC, esprocarb, molinate, prosulfocarb, thiobencarb, triallate, fentrazamide, cafenstrole, dicamba, picloram, diflufenican, propanil, bromoxynil, dichlobenil, ioxynil, sulcotrione, mesotrione, isoxaflutole, isoxachlortole, flucarbazone, propoxycarbazone (or its sodium salt), foramsulfuron, penoxsulam, trifloxysulfuron (or its sodium salt), pyriftalid, trifloxysulfuron (or its sodium salt), pyriftalid, flufenpyr-ethyl, profluazol, pyraclonil, benfluamid, picolinafen, amicarbazone, flufenpyr-ethyl, profluazol, pyraclonil, benfluamid, picolinafen, amicarbazone, chlorasuiam, diclosulam, florasulam, flumetsulam, metosulam, amitrol, benfuresate, bentazone, cinmethylin, clomazone, chlopyralid, difenzoquat, dithiopyr, ethofumesate, flurochloridone, indanofane, isoxaben, oxaziclomefone, pyridate, pyridafol, quinchlorac, quinmerac, tridiphane and flamprop.

Preferably, the formulation of the invention comprises a mixture of a compound of formula (I), its stereoisomers, salts or solvates thereof and an ALS inhibitor, such as a sulphonylurea.

Sulphonylureas are a well know family of ALS inhibitors with numerous examples in the pesticide industry. For example, Triasulfuron, tribenuron-methyl, iodosuifuron-methyl (as the sodium salt), mesosulfuron- methyl, and pyroxsulam are disclosed in "The Pesticide Manual, ed. C.D.S. Tomlin, 15th edition, 2009, British Crop Production Council, UK, see entry 494 "iodosulfuron-methyl- sodium" (pp. 658-660), entry 550 "mesosulfuron-methyl" (pp. 733-734), entry 753 "pyroxsulam" (pp. 1001-1002), entry 868 "triasulfuron" (pp. 1150-1151), and entry 873 "tribenuron-methyl" (pp. 1156-1158).

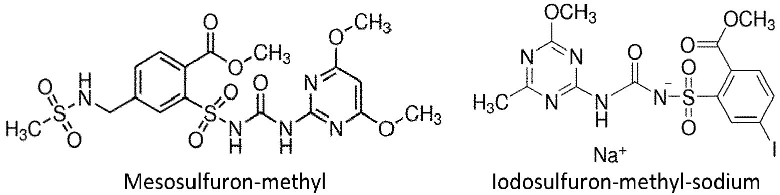

Preferably, the sulphonylurea herbicide is one selected from the group consisting of amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron and alkyl ethers or esters thereof, as well as salts thereof.

For example, the sulphonylurea herbicide can be one of compound of formula (II), its isomers, stereoisomers, salts and solvates thereof 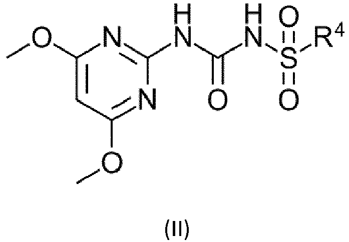 wherein
R⁴ is phenyl or heterocyclyl, either optionally substituted by one or two groups selected from the group consisting of halogen, cyano, C₁-C₆-alkyl, C₁-C₆-haloalkyl, -(C=O)-R⁷, - (C=O)-O-R⁷, -(C=O)-N(R⁷)(R⁸), -SO₂-R⁷, and C₁-C₆-alkyl-N(H)-SO₂-R⁷, wherein R⁷ is selected from the group consisting of C₁-C₆-alkyl, C₁-C₆-alkyl-C₆-C₁₀-aryl, and C₆-C₁₀-aryl-C₁-C₆-alkyl; and R⁸ is selected from the group consisting of hydrogen, C₁-C₆-alkyl, C₁-C₆-alkyl-C₆-C₁₀-aryl, and C₆-C₁₀-aryl-C₁-C₆-alkyl.

It is preferred that in the compounds of formula (II) R⁴ is phenyl or piridine, either optionally substituted by one or two groups selected from the group consisting of halogen, cyano, C₁-C₆-alkyl, -(C=O)-O-R⁷, and C₁-C₃-alkyl-N(H)-SO₂-R⁷, wherein R⁷ is selected from the group consisting of C₁-C₆-alkyl; and R⁸ is selected from the group consisting of hydrogen, and C₁-C₆-alkyl.

More preferably, the compound of formula (II) is mesosulfuron or a mesosulfuron ester, for example mesosulfuron-methyl.

The fact that the key to obtain a stable formulation in oil carrier of a mixture comprising a compound of formula (I) (e.g. pinoxaden) and a compound of formula (II) (e.g. mesosulfuron) was the control of the pH at 5.0 or more was even more surprising, and it has opened the door to stable oil suspensions comprising both, since it could be stablished that the co-herbicide did not interfere in the stability of the compound of formula (I).

Combinations of pinoxaden and structural derivatives thereof together with sulphonylureas are known in the art. WO 2011/107741 A1 discloses herbicidal compositions comprising a mixture of (a) an ALS inhibitor in the form of an aluminum salt and (b) pinoxaden. The examples include the simultaneous treatment with pinoxaden commercial formulations (including a safener) and with dicamba salts, trisulfuron, tribenuron-methyl commercial formulations. Also, EC formulations and other solid formulations are mentioned in pages 26-29, although the specific active ingredients in each case are not mentioned.

WO 01/17351 (Syngenta Participations AG) discloses a composition comprising a) a 3-hydroxy-4-(4-methylphenyl)-5-oxo-pyrazoline, b) a safener and c) an oil of vegetable or animal origin, a mineral oil or derivatives thereof. Preferred oils are those of vegetable origin, and all the examples refer to emulsifiable concentrates (EC formulations) and other solid formulations (pages 33-36), wherein the oil is added as an additive (0.7-1 w/w %) in the tank mixture (see the biological examples on pages 37-40). The oils used are MERGE (an aromatic adjuvant for emulsifiable concentrates) and Emery 2231, a fatty acid methyl ester derivative.

The co-herbicide, preferably a sulphonylurea, can be present in a wide range of concentrations, typically, in an amount from 0.01 to 95 w/w %, typically from 0.1 to 50 w/w %, for example, from 0.2 to 5 w/w %, or from 0.5 to 3 w/w %. Said co-herbicides can even be in lower amounts, for example, between 0.01 and 0.5 w/w %.

The formulations of the invention may comprise from 0.01 to 95 w/w %, typically from 0.1 to 55 w/w %, of total active ingredients, for example, from 0.5 to 20 w/w %, or from 1 to 15 w/w % of total active ingredients, considering active ingredients as the sum of any compounds of formula (I), any co-herbicides and any safeners.

### Safeners

When using herbicides, the crops may also suffer damage, depending on, for example, the amount of herbicide used and the method of application, the nature of the soil or the climatic conditions, for example hours of daylight, temperature and amount of rainfall. Various safeners (previously known as "antidotes") are known to antagonize the harmful effect of the herbicide on crops and protect them without appreciably impairing the herbicidal action on the undesirable plants to be controlled.

These substances are known in the agricultural industry and are taught in different reviews, for example, Délye C, et al (2017) "Herbicide Safeners Decrease Sensitivity to Herbicides Inhibiting Acetolactate-Synthase and Likely Activate Non-Target-Site-Based Resistance Pathways in the Major Grass Weed Lolium sp. (Rye-Grass)" Front. Plant Sci. 8:1310, doi: 10.3389/fpls.2017.01310; Davies, J. "Herbicide safeners - commercial products and tools for agrochemical research", Pesticide Outlook, February 2001, p. 10-15 10.1039/b100799h; Jablonkai, I. "Herbicide Safeners: Effective Tools to Improve Herbicide Selectivity" Intech open Science, http://dx.doi.org/10.5772/55168; Rosinger, C. "Sektion 6: Developments in herbicides - Herbicide Safeners: an overview", 26th German Conference on weed Biology an Weed Control, March 11-13, 2014, Braunschweig, Germany.

Exemplary safeners that can be used in the present invention are anhydrides (e.g. 1,8-naphthalic anhydride), dihydropyrazole-dicarboxylates (e.g. mefenpyr), dihydroisoxazole-carboxylates (e.g. isoxadifen), thiazole carboxylic acids (e.g. flurazole), phenyl-pyrimidines (e.g. fenclorim), 1,2,4-Triazole-carboxylates (e.g. fenchlorazole), dichloroacetamides (e.g. dichlormid), Ureas (e.g. dymron), arylsulfonyl-benzamides (e.g. cyprosulfamide), oxime ethers (e.g. cyometrinil), 8-Quinolinoxy-carboxylic esters (e.g. cloquintocet), dichloromethylketals (e.g. MG-91), or piperidine-1-carbothioates (e.g. Dimepiperate).

For example, known safeners that can be used in the present application are oxabetrinil, 1,8-naphthalic anhydride, metcamifen, mephenate, mefenpyr, jiecaoxi, jiecaowan, isoxadifen, furilazole, fluxofenim, flurazole, fenclorim, fenchlorazole, dietholate, dicyclonon, dichlormid, cyprosulfamide, cyometrinil, cloquintocet, AD-67, BPCMS, MG-91, Dymron, benoxacor or salts, solvates or esters thereof.

A preferred group of safeners in the present invention are the dihydropyrazole-dicarboxylates or the 8-Quinolinoxy-carboxylic esters. More preferably, the formulation of the invention comprises a safener selected from the group consisting of cloquintocet or a salt thereof, preferably an alkali, alkaline earth, sulfonium or ammonium cation of cloquintocet, cloquintocet-mexyl, mefenpyr or a salt thereof, an alkali, alkaline earth, sulfonium or ammonium cation of mefenpyr, mefenpyr-diethyl and mixtures thereof, preferably mefenpyr-diethyl.

A safener in accordance with the invention may, depending on the intended purpose, be used to pre-treat a seed material of the cultivated plant (dressing the seed or the seedlings) or may be incorporated into the soil before or after sowing. It may, however, also be applied, alone or together with the herbicide and the oil, after the emergence of the plants. The treatment of the plants or the seeds with the safener can therefore, in principle, be effected independently of the time at which the herbicide is applied. The treatment of the locus can, however, also be carried out by applying the herbicide of formula (I), the oil and the safener simultaneously (for example in the form of a tank mixture). In the present invention it is preferred that the safener is part of the same formulation as the compounds of formula (I) and the oil (and optionally together with a co-herbicide) and is preferably used as post-emergence control. The rate of application of the safener in relation to the herbicide depends largely on the method of application. For example, the molar ratio of compound of formula (I):safener is generally from 100:1 to 1:10, preferably from 20:1 to 1:2, for example 3:1 to 1:1.5. The concentration of the safener in the application can for example be from 0.01 to 95 w/w %, typically from 0.1 to 50 w/w %, for example, from 0.5 to 10 w/w %, or from 1 to 5 w/w %.

In terms of the amounts of safener to be applied, the present invention can use customary amounts, for example, from 0.001 to 1.0 kg of safener/ha, preferably from 0.001 to 0.25 kg of safener/ha, are generally applied.

### Formulations

The formulations of the invention may also comprise further additives commonly used in the field of agrochemistry, such as wetting agents, adjuvants, adhesives, neutralizers, antifoams, for example silicone oil, sequestrates, fertilizers, preservatives or biocides, viscosity regulators, binders, tackifiers, thickeners, stabilizers, buffers or anti-freeze agents, or surfactants, amongst others. Typical additives that can be used in the formulations of the invention are for example disclosed in WO 2013/021229. The formulations are prepared in a known manner, for example by intimately mixing and/or grinding the active ingredients or optionally with other solid components, with the oil carrier.

Said additives are known in the art and the skilled person can find numerous examples in the literature. For examples, McCutcheon's, "Detergents and Emulsifiers Annual", MC Publ. Corp., Ridgewood NJ.; or Sisley and Wood, "Encyclopedia of Surface Active Agents", Chem. Publ. Co. Inc., N.Y. 1964; provide detailed examples of surfactants that can be useful. Surfactants can be anionic surfactants of the dodecylbenzylsulfonate type (alkyl benzene sulfonate salts such as Nansa EVM 70/2E)), especially the calcium salts thereof, and also non-ionic surfactants of the fatty alcohol ethoxylate type. Examples of commercially available surfactants are the Genapol types (Clariant AG, Muttenz, Switzerland). Typical surfactants can also be selected from the group consisting of polyacrylate graft copolymers (e.g. Dispersogen PSL 100), phosphated alcohol ethoxylates (e.g. Hostaphat 1306) and star structure polymers (e.g. Atlox 4916). The concentration of the surface-active substances is generally from 1 to 30 w/w %, preferably between 2 and 10 w/w %.

The antifoams or defoamers useful in the formulations of the invention can be selected from the group consisting of silicon oil, polyethylene glycol polypropylene glycol copolymers and alkyl polyacrylates.

The thickeners useful in the formulations of the invention can be selected from the group consisting of organically-derived hectorite clay (e.g. Bentone 38), polyester block co-polymer (e.g. Atlox Rheostrux 100), organically-derived silica (e.g. Aerosil R816).

### Methods

The compositions according to the invention are suitable for all methods of application that are customary in agriculture, for example pre-emergence application, post-emergence application and seed dressing.

Pinoxaden and derivatives thereof of formula (I), stereoisomers , salts or solvates thereof are known to be suitable for use on non-oat cereals such as wheat, and on barley, rye and/or triticale, especially wheat and/or barley (i.e. is selective for non-oat cereals), and is typically applied post-emergence for control of grassy weeds such as Alopecurus, Apera, Avena, Lolium, Phalaris or Setaria species, e.g. at application rates of from 30 to 60 g/ha (ha = hectare).

The invention thus relates also to a method for the control of an undesired plant comprising dispersing in an aqueous solution the formulation of the invention, optionally in the presence of one or more adjuvants, and contacting the resulting mixture with the locus of said plant.

Crops are to be understood as including those that have been made tolerant to herbicides or classes of herbicides by means of conventional breeding or genetic engineering methods.

The undesired plants to be controlled may include one or more of Alfalfa (Medicago sativa), Amsinckia (Amsinckia spp.), Capeweed (Arctotheca calendula), Charlock (wild mustard, Sinapis arvensis), Chickweed (Stellaria media), Corn gromwell (sheepweed, white ironweed) (Buglossoides arvensis), Common couchgrass (Agropyron repens), Corn mint {Mentha arvensis), Crassula (Crassula spp.), Creeping thistle (Cirsium arvense), False bindweed (Calystegia sepium), False mayweed (Tripleurospermum maritimum), Field bindweed (Convolvulus arvensis), Fool's parsley (Aethusa cynapium), Gallant soldier (Galinsoga parviflora), Henbit deadnettle (Lamium amplexicaule), Hedge mustard (Sisymbrium officinale), Hyssop loosestrife (Lythrum hyssopifolia), Indian hedge mustard (Sisymbrium orientale), Italian rye-grass (Lolium multiflorum), Marshmallow (Malva parviflora), Sticky mouse-eared chickweed (Cerastium glomeratum), Night-scented stock (Matthiola longipetala), Paterson's curse (Salvation Jane) (Echium plantagineum), Pheasant's eye (Adonis microcarpa), Pineapple weed (Matricaria discoidea), Poinsettia (Euphorbia pulcherrima), Prickly lettuce (Lactuca serriola), Purple deadnettle (Lamium purpureum), Rough poppy (Papaver hybridum), Shepherd's purse (Capsella bursa- pastoris), Skeletonweed (Chondrilla juncea), Sorrel (Rumex acetosella), Ivy-leaved Speedwell (Veronica hederifolia), Dwarf nettle (Stinging nettle) (Urtica urens), Toad rush (Juncus bufonius), Turnipweed (Rapistrum rugosum), Wild radish (Raphanus raphanistrum), Wild turnip (Brassica tournefortii), Knotgrass {Polygonum aviculare), Annual mercury (Mercurialis annua), False castor oil (thomapples) (Datura ferox), Ball mustard (Neslia paniculata), Barnyard grass (Echinochloa crusgalli), Beta vulgaris, Black Bindweed (Fallopia convolvulus), Blackgrass (Alopecurus myosuroides), Black pigweed (Trianthema portulacastrum), Buchan weed (Hirschfeldia incana), Bull's head (Tribulus terrestris), Buttonweed (Abutilon theophrasti), Catsear (Hypochaeris radicata), Cleavers (Galium aparine), Common bugloss (Anthusa arvensis), Common borage (Boragio officinales), Common cotula (Cotula australis), Common groundsel (Senecio vulgaris), Common hempnettle (Galeopsis tetrahit), Common nettle (Urtica dioica), Corn spurry (Spergula arvensis), Creeping speedwell (Veronica filiformis), Crown beard (dogweed) (Verbesina encelioides), Crowsfoot grass (Eleusine indica), Dock (Rumex spp.), Doublegee (Emex australis), Fat hen (Atriplex prostrata), Field madder (Sherardia arvensis), Field Pansy (Viola arvensis), Field oennycress (Thlaspi arvense), Fog grass (Holcus lanatus), Fumitory (Fumaria spp.), Fumaria officinalis, Geranium (Geranium spp.), Geranium dissectum, Great brome (Bromus diandrus), Greater plantain (Plantago major), Green summer grass (Digitaria ciliaris), Hare's ear (treacle mustard) (Conringia orientalis), Heliotrope (Heliotr opium spp.), Hempnettle (Galeopsis sp.), Horehound (Marrubium vulgare), Indian hedge mustard (Sisymbrium orientale), Lesser swinecress (Coronopus didymus), Matricaria spp., Scented mayweed (Matricaria recutita), Scentless mayweed (Matricaria inodora), Mountain sorrel (purple calandrinia) (Calandrinia ciliata), Mustard, Nettle, Urtica spp., Nightshade (Solanum nigrum), Pale persicaria (Persicaria lapathifolia), Perennial sowthistle (Sonchus arvensis), Persian speedwell (Veronica persica), Chenopodium sp., Pigweed (Chenopodium albu ), Powell's amaranth (Amaranthus powellii), Red hempnettle (Galeopsis intermedia), Redshank (Persicaria maculosa), Redroot pigweed (Amaranthus retroflexus), Scarlet pimpernel (Anagallis arvensis), Scrub nettle (stinging nettle) (Urtica incisa), Annual sowthistle (Sonchus oleraceus), Spiny emex (Three cornered jack) (Emex australis), Spreading orache (Atriplex patula), Stagger weed (Stachys arvensis), Storksbill (Erodium cicutarium), Summer grass, Sun spurge (Euphorbia helioscopia), Toad rush (Juncus bufonius), Black bindweed (Polygonum convolvulus), Polygonum spp., Wild Pansy (Viola tricolor), Winter grass (annual meadow grass) (Poa Annua), Wild oat (Avena fatua), Winter rape (Brassica napus) and Yellow burrweed (Amsinckia calycina).

Preferably, the undesirable weeds to be controlled are monocotyledonous weeds, for example the monocotyledonous weeds Avena, Agrostis, Phalaris, Lolium, Bromus, Alopecurus, Setaria, Digitaria, Brachiaria, Echinochloa, Panicum, Sorghum hal./bic., Rottboellia, Cyperus, Brachiaria, Echinochloa, Scirpus, Monochoria and Sagittaria and the dicotyledonous weeds Sinapis, Chenopodium, Stellaria, Galium, Viola, Veronica, Matricaria, Papaver, Solanum, Abutilon, Sida, Xanthium, Amaranthus, Ipomoea and Chrysanthemum.

The rate of application of the compound of formula (I) is generally from 0.001 to 2 kg/ha, but preferably from 0.005 to 1 kg/ha.

The nature of the different possible compounds of formula (I), stereoisomers, salts or solvates thereof, or co-herbicides, or oil carriers or safeners, as well as their amounts, can be combined to create different combinations. Thus, for example, a formulation of the invention may comprise
(i) between 0.2 and 15 w/w% of pinoxaden;
(ii) between 0.1 and 10 w/w % of mesosulfuron-methyl; and
(iii) 60 to 97 w/w % of a paraffinic oil carrier having a pH of 5.0 or more, preferably having a water content of 0.01 to 0.19 w/w % or 0.05 to 0.15 w/w %, with respect to the weight of the oil carrier, as measured by Karl-Fischer titration.

Alternatively, the formulation of the invention may comprise
(i) between 0.2 and 15 w/w% of pinoxaden;
(ii) between 0.1 and 10 w/w % of mesosulfuron-methyl;
(iii) between 60 and 97 w/w % of a paraffinic oil carrier having a pH of 5.0 or more, preferably having a water content of 0.01 to 0.19 w/w % or 0.05 to 0.15 w/w %, with respect to the weight of the oil carrier, as measured by Karl-Fischer titration; and
(iv) between 1 and 15 w/w % of a surfactant system.

Alternatively, the formulation of the invention consists of
(i) an herbicidal effective amount of a compound of formula (I), preferably a compound of formula (IA) or of formula (IB) as defined above, stereoisomers, salts or solvates thereof, as defined elsewhere in the present application;
   and
(ii) 5 to 99 w/w % of an oil carrier;
   characterized in that the oil carrier has a pH of 5.0 or more, as measured by a process described above;
   preferably having a water content of 0.01 to 0.19 w/w % or 0.05 to 0.15 w/w %, with respect to the weight of the oil carrier, as measured by Karl-Fischer titration;
      and
   optionally, at least one agrochemical acceptable additive and at least one co-herbicide, preferably a sulphonylurea, more preferably, mesosulfuron or an ester thereof.

Alternatively, the formulation of the invention consists of
(i) between 0.2 and 15 w/w% of pinoxaden;
(ii) between 0.1 and 10 w/w % of a sulfonylurea herbicide, for example, mesosulfuron-methyl;
(iii) 60 to 97 w/w % of a paraffinic oil carrier having a pH of 5.0 or more, preferably having a water content of 0.01 to 0.19 w/w % or 0.05 to 0.15 w/w %, with respect to the weight of the oil carrier; and
optionally, at least one agrochemical acceptable additive.

A further aspect of the invention is a formulation comprising
(i) an herbicidal effective amount of a compound of formula (I), preferably a compound of formula (IA) or of formula (IB), stereoisomers, salts or solvates thereof 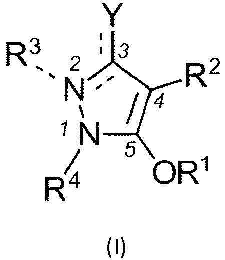 wherein
   R¹ is selected from the group consisting of C₁-C₆-alkyl, C₁-C₆-haloalkyl and -(C=O)-R⁵; wherein R⁵ is selected from the group consisting of C₁-C₆-alkyl, -C₁-C₆-alkyl-C₆-C₁₀-aryl, and -C₆-C₁₀-aryl-C₁-C₆-alkyl;
   Y is =O or X; and
   when Y is =O,
      positions 2 and 3 of the ring are connected by a single bond;
      R³ and R⁴ together form a -(CH₂)ₙ-O-(CH₂)ₘ- group, forming a ring together with the two nitrogen atom to which they are attached, wherein n and m are each an integer independently selected from 1 and 2; and
      R² is X;
   when Y is X,
      positions 2 and 3 of the ring are connected by a double bond;
      R² is selected from the group consisting of halogen, C₁-C₆-alkyl and C₁-C₆-haloalkyl;
      R³ is not present; and
      R⁴ is selected from the group consisting of C₁-C₆-alkyl, C₁-C₆-haloalkyl, -C₁-C₆-alkyl-C₆-C₁₀-aryl, and -C₆-C₁₀-aryl-C₁-C₆-alkyl;
   and wherein
      X is a phenyl group substituted by 1, 2, 3 or 4 R⁶ groups, wherein each R⁶ group is independently selected from the group consisting of halogen, C₁-C₆-alkyl, C₁-C₆-haloalkyl and -O-(CH₂)ᵥ-(C=O)-R⁷; wherein v is 0, 1, 2 or 3; and R⁷ is selected from the group consisting of -OH, -O-C₁-C₆-alkyl, -O-C₁-C₆-alkyl-C₆-C₁₀-aryl, -O-C₆-C₁₀-aryl-C₁-C₆-alkyl, -C₁-C₆-alkyl, -C₁-C₆-alkyl-C₆-C₁₀-aryl, and -C₆-C₁₀-aryl-C₁-C₆-alkyl;
      and
(ii) 5 to 99 w/w % of a paraffinic oil.

The positions in the pyrazole ring of formula (I) are marked from 1 to 5 by the corresponding atom, positions 1 and 2 corresponding to the nitrogen atoms of the ring.

Each embodiment disclosed herein is contemplated as being applicable to each of the other disclosed embodiments. Thus, all combinations of the various elements described herein are within the scope of the invention. In addition, the elements recited in the formulation embodiments can be used in the method and use embodiments described herein and vice versa.

### EXAMPLES

Different mixtures were prepared by grinding the solid materials and intimately mixing them with the oil carrier. The mixtures included individual mixtures of a compound of formula (I), namely pinoxaden, and of a co-herbicide (e.g. mesosulfuron), for which the stability was tested. Also, the stability was tested for a mixture of pinoxaden, mesosulfuron and mephenpyr-diethyl.

### Example 1: Stability test

The stability of pinoxaden suspended in different oils was tested following standard conditions (1 week or 2 weeks in the oven at 54°C). The results are shown in Table 1. If the percentage of pinoxaden present in the solution after 1 week and after 2 weeks was above 95%, the stability was considered "Excellent". If the stability after 1 week and 2 weeks was above 90%, but below 95%, the stability was considered "Acceptable". All other experiments were considered failures and were marked as "Unstable".

**Table 1: Stability tests of pinoxaden**

| | | | **chemical stability pinoxaden w/w% in the solution (% amount of pinoxaden with respect to start)** | | | |
|---|---|---|---|---|---|---|
| **oil name** | **pH (1%)** | **water content [%]** | **start** | **1 week 54°C** | **2 weeks 54°C** | |
| Safflower oil | 4.63 | 0.23 | 6.5 | 5.8 (89%) | 5.9 (91%) | Unstable |
| Ednor ME SU/RADIA 7961 | 4.68 | 0.26 | 5.7 | 4.3 (75%) | 3.2 (56%) | Unstable |
| Pine oil | 5.83 | 1.14 | 5.8 | 5.6 (97%) | 5.4 (93%) | Acceptable |
| Isopar V | 6.4 | 0.09 | 6 | 5.8 (97%) | 6.2 (103%) | Excellent |
| Isopar V | 6.4 | 0.09 | 5.9 | 5.7 (97%) | 5.7 (97%) | Excellent |
| Linseed oil | 6.66 | 0.25 | 5.7 | 5.6 (98%) | 5.3 (93%) | Acceptable |
| canola oil (food grade) | 7.1 | 0.23 | 6.1 | 5.7 (93%) | 5.7 (93%) | Acceptable |
| Petrol D60 - SHELL | 7.58 | 0.22 | 4.7 | 4.4 (94%) | 4.5 (96%) | Acceptable |
| canola oil (Croda) | 8.23 | 0.16 | 6.1 | 5.9 (97%) | 5.9 (97%) | Excellent |

The results of Table 1 prove that whenever the pH of the oil used in the formulation is 5.0 or more, the stability of pinoxaden was acceptable or excellent. If additionally, the water content in the oil is below 0.2 w/w%, the stability in all cases was excellent.

The same experiments were repeated for mesosulfuron, which was in all cases stable.

The pH of the oil was measured following the procedure of:
a) making a deionized water mixture having 1 w/w% of oil;
b) stirring the mixture of the previous step with a magnetic stirrer at 1,500 RPM for 10 minutes at 25°C;
c) allowing the phases in the mixture to separate for 10 min at 25°C,
d) collecting into a separate vial the lower aqueous phase;
e) measuring at 25°C the pH of aqueous phase collected using a JENWAY 3510 pH meter, with an AgCl, liquid filled single junction electrode, such that the electrode and the thermocouple of the pH meter are inserted into the vial containing the aqueous water phase until the measured pH value is stable for 10s.

### Example 2: Stability test of a mixture of pinoxaden, mesosulfuron and mephenpyr-diethyl

Following the same conditions as in Example 1, the stability of a mixture of pinoxaden, mesosulfuron and mephenpyr-diethyl in Isopar V (mineral oil with pH of 6.4 and water content of 0.09 w/w %) was tested. The mixture was also tested for an additional week at 54°C. The composition of the mixture is summarized on Table 2 and the results of the stability test on Table 3.

**Table 2: Mixture composition**

| **Component type** | **Name** | **w/w %** |
|---|---|---|
| Active Ingredient | Mesosulfuron methyl | 1.31% |
| Active Ingredient | Pinoxaden | 6.36% |
| Safener | Mefenpyr diethyl | 3.75% |
| Solvent | Isopar V | 88.58% |

**Table 3: Stability of Mixture**

| | Time 0 | 1 week 54°C | 2 weeks 54°C |
|---|---|---|---|
| Pinoxaden | 6.30% | 6.50% | 6.40% |
| Mesosulfuron | 1.40% | 1.30% | 1.40% |
| Mefenpyr | 3.90% | 3.60% | 3.80% |

The results prove that all three components displayed an excellent stability in an oil having a pH above 5.0 and a water content below 0.2 w/w%, with respect to the total weight of the oil carrier.

## Claims

1. A formulation for controlling undesired plants comprising
(i) pinoxaden, its stereoisomers, salts or solvates thereof;
and
(ii) 5 to 99 w/w % of an oil carrier;
**characterized in that** the oil carrier has a pH of 5.0 or more, as measured by a process consisting of the steps of
a) making a deionized water mixture having 1 w/w% of oil;
b) stirring the mixture of the previous step with a magnetic stirrer at 1,500 RPM for 10 minutes at 25°C;
c) allowing the phases in the mixture to separate for 10 min at 25°C,
d) collecting into a separate vial the lower aqueous phase;
e) measuring at 25°C the pH of aqueous phase collected using a JENWAY 3510 pH meter, with an AgCl, liquid filled single junction electrode, such that the electrode and the thermocouple of the pH meter are inserted into the vial containing the aqueous water phase until the measured pH value is stable for 10s.

2. The formulation according to claim 1, wherein the pH is comprised between 5.0 and 10.0.

3. The formulation according to claim 2, wherein the pH is comprised between 5.5 and 9.0.

4. The formulation according to any of claims 1 to 3, comprising a sulphonylurea herbicide, wherein the sulphonylurea herbicide is a compound of formula (II), its isomers, stereoisomers, salts and solvates thereof 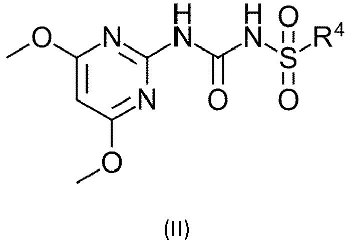 wherein
R⁴ is phenyl or heterocyclyl, either optionally substituted by one or two groups selected from the group consisting of halogen, cyano, C₁-C₆-alkyl, C₁-C₆-haloalkyl, -(C=O)-R⁷, - (C=O)-O-R⁷, -(C=O)-N(R⁷)(R⁸), -SO₂-R⁷, and C₁-C₆-alkyl-N(H)-SO₂-R⁷, wherein R⁷ is selected from the group consisting of C₁-C₆-alkyl, C₁-C₆-alkyl-C₆-C₁₀-aryl, and C₆-C₁₀-aryl-C₁-C₆-alkyl; and R⁸ is selected from the group consisting of hydrogen, C₁-C₆-alkyl, C₁-C₆-alkyl-C₆-C₁₀-aryl, and C₆-C₁₀-aryl-C₁-C₆-alkyl.

5. The formulation according to claim 4, wherein R⁴ is phenyl or piridine, either optionally substituted by one or two groups selected from the group consisting of halogen, cyano, C₁-C₆-alkyl, -(C=O)-O-R⁷, and C₁-C₃-alkyl-N(H)-SO₂-R⁷, wherein R⁷ is selected from the group consisting of C₁-C₆-alkyl; and R⁸ is selected from the group consisting of hydrogen, and C₁-C₆-alkyl.

6. The formulation according to any of the claims 4 or 5, wherein the compound of formula (II) is mesosulfuron or a mesosulfuron-methyl.

7. The formulation according to any of the previous claims, wherein the water content of the oil is less than 0.2 w/w %, with respect to the total weight of the oil carrier, as measured by Karl-Fischer titration.

8. The formulation according to any of the previous claims, wherein the water content of the oil is less than 0.20 w/w %, with respect to the total weight of the oil carrier, as measured by Karl-Fischer titration, and the pH is between 5.5 and 10.0, preferably between 5.5 and 9.0, as measured by the method defined in claim 1.

9. The formulation according to any of the previous claims, wherein the herbicidal effective amount of pinoxaden, its stereoisomers, salts or solvates thereof is between 0.1 and 50 w/w %.

10. The formulation according to claim 1, for the control of undesired plants comprising
(i) between 0.2 and 15 w/w% of pinoxaden;
(ii) between 0.1 and 10 w/w % of mesosulfuron-methyl; and
(iii) 60 to 97 w/w % of a paraffinic oil carrier having a pH of 5.0 or more.

11. The formulation according to claim 1, for the control of undesired plants comprising
(i) between 0.2 and 15 w/w% of pinoxaden;
(ii) between 0.1 and 10 w/w % of mesosulfuron-methyl;
(iii) between 60 and 97 w/w % of a paraffinic oil carrier having a pH of 5.0 or more; and
(iv) between 1 and 15 w/w % of a surfactant system.

12. The formulation according to any of the previous claims, for the control of undesired plants consisting of
(i) pinoxaden, its stereoisomers, salts or solvates thereof;
and
(ii) 5 to 99 w/w % of an oil carrier;
**characterized in that** the oil has a pH of 5.0 or more; and
optionally, at least one agrochemical acceptable additive.

13. The formulation according to claim 1, for the control of undesired plants consisting of
(i) between 0.2 and 15 w/w% of pinoxaden;
(ii) between 0.1 and 10 w/w % of a sulfonylurea herbicide, for example, mesosulfuron-methyl;
(iii) 60 to 97 w/w % of a paraffinic oil carrier having a pH of 5.0 or more; and
optionally, at least one agrochemical acceptable additive.

14. A method for the control of an undesired plant comprising dispersing in an aqueous solution the formulation as defined in any of the previous claims and contacting the resulting mixture with the locus of said plant.

15. Use of the formulation defined in any of claims 1 to 13 for the control of undesired plants.
